# EUROPÄISCHE PATENTSCHRIFT

(11) **EP 1 861 305 B1**
(45) Veröffentlichungstag und Bekanntmachung des Hinweises auf die Patenterteilung: **09.07.2008**
(21) Anmeldenummer: 06723534.1
(22) Anmeldetag: 18.03.2006
(51) Int. Cl.: B62D 33/077, B62D 33/10

(54) **LAGERUNG EINES KIPPBAREN FAHRERHAUSES**
MOUNTING SYSTEM OF A TILTING DRIVER'S CAB
MONTAGE D'UNE CABINE DE CONDUITE BASCULANTE

(30) Priorität: 24.03.2005 DE 102005014402
(43) Veröffentlichungstag der Anmeldung: 05.12.2007
(73) Patentinhaber: Daimler AG, 70327 Stuttgart (DE)
(72) Erfinder: BOLLINGER, Walter, 71364 Winnenden (DE); EBINGER, Christian, 72144 Dusslingen (DE)
(86) Internationale Anmeldenummer: PCT/EP2006/002505
(87) Internationale Veröffentlichungsnummer: WO 2006/100008

(56) Entgegenhaltungen:
- EP-A- 0 972 700
- DE-A1- 4 442 877
- DE-A1- 19 612 502

## Beschreibung

Die Erfindung betrifft eine Lagerung, insbesondere eine vordere Lagerung eines kippbaren Fahrerhauses eines Lastkraftwagens nach dem Oberbegriff des Patentanspruchs 1. Bei modernen Lastkraftwagen wird erhöhter Wert auf eine passive Sicherheit gelegt. Hierbei ist es notwendig, dass die Fahrerkabine beziehungsweise das Fahrerhaus in einem Frontalcrashfall in der Form deformiert wird, dass der Fahrer und die weiteren Insassen möglichst ohne größere Verletzungen den Unfall überstehen. Da die meisten Lastkraftwagen vom Frontlenkertyp sind und somit keine längere Knautschzone aufweisen, muss bei einem Frontalaufprall das Fahrerhaus aus der Crashzone wegbewegt werden. Hierbei hat es sich als zweckmäßig herausgestellt, dass zur Gewährleistung einer optimalen Sicherheit das Fahrerhaus soweit entgegen der Fahrtrichtung zurückbewegt wird, bis das Crashhindernis an dem Motorblock, der etwas nach hinten versetzt unter dem Fahrerhaus angeordnet ist, zum Stehen kommt.

In der DE 196 12 502 A1 und in der EP 972 700 A2 ist eine Fahrerhauslagerung eines Nutzfahrzeuges beschrieben, wobei eine Stabilisatorschwinge vorgesehen ist, die an einem hinteren Ende über einen Lagerbock mit einem Fahrzeugrahmen in Verbindung steht und die am vorderen Ende über ein Federdämpferbein mit dem Fahrerhaus in Verbindung steht. Eine derartige Ausgestaltungsform garantiert jedoch nicht in jedem Fall ein sicheres Zurückweichen des Fahrerhauses in einem Crashfall.

Die Erfindung weist die Aufgabe auf, eine Fahrerhauslagerung für einen Lastkraftwagen bereitzustellen, die gegenüber dem Stand der Technik ein besseres Crashverhalten aufweist.

Die Lösung der Aufgabe besteht in einer Lagerung eines kippbaren Fahrerhauses eines Lastkraftwagens mit den Merkmalen des Patentanspruchs 1.

Die Lagerung eines kippbaren Fahrerhauses eines Lastkraftwagens nach Anspruch 1 umfasst mindestens ein Federdämpferbein an jeder Fahrzeugseite und eine Stabilisatorschwinge, die ebenfalls an jeder Fahrzeugseite einen, in etwa in Fahrzeuglängsrichtung angeordneten Schenkel aufweist. Die beiden Schenkel der Stabilisatorschwinge sind hierbei im Bereich ihres vorderen Endes durch eine quer zur Fahrzeuglängsrichtung verlaufende Stabilisatorstange verbunden. Die beiden Schenkel und die Stabilisatorstange zusammen bilden die Stabilisatorschwinge. Im Bereich ihres hinteren Endes sind die Schenkel an jeweils einen Lagerbock angelagert. Der Lagerbock selbst ist wiederum an einem Fahrzeugrahmen angebracht. Die Federdämpferbeine stehen im unteren Bereich ebenfall mit dem Fahrzeugrahmen in Verbindung. In ihrem oberen Bereich sind die Federdämpferbeine mit dem Fahrerhaus (beispielsweise über eine Konsole) verbunden, wobei sie dort gleichzeitig mit den vorderen Enden des jeweiligen Schenkels der Stabilisatorschwinge in Verbindung stehen.

Die Erfindung zeichnet sich dadurch aus, dass der Lagerbock eine Führung aufweist und die hinteren Enden der Schenkel in der Führung in derart gelagert sind, dass sie nach Überwindung einer kritischen Kraft entlang der Führung nach hinten verschiebbar sind.

Durch dieses Merkmal nämlich die sichere Führung der Stabilisatorschwinge und des damit verbundenen Fahrerhauses nach hinten wird bewirkt, dass das Fahrerhaus aus der Gefahrenzone also dem Hindernis herausgezogen wird und dabei fest mit dem Rahmen in Verbindung bleibt. Das Fahrerhaus ist bevorzugt soweit nach hinten in der Führung bewegbar, bis das Hindernis am Motorblock des Lastkraftwagens zum Stillstand kommt. Hierbei kann das Fahrerhaus zusätzlich an seine Stirnseite gezielt deformierbar ausgestaltet sein und beim Auftreffen des Hindernisses eben diese Deformation erfolgen.

In einer Ausgestaltungsform der Erfindung ist die Führung am Lagerbock nach hinten unten gerichtet. Hierbei wird in einem Crashfall das Fahrerhaus nach hinten gezogen, wobei der Schenkel, der im vorderen Bereich am Fahrerhaus angelagert ist, nach hinten unten abschwenkt.

Am Ende der Führung ist in einer zweckmäßigen Ausgestaltung eine Wegbegrenzung vorgesehen, so dass eine sichere Befestigung des Fahrerhauses über die Stabilisatorschwinge gewährleistet ist.

In bevorzugter Weise ist die Führung mit einer oberen und unteren Führungsschiene versehen, so dass ein sicheres Führen des Schenkels in der Führung erfolgen kann.

Zur Verbindung des Schenkels mit der Führung ist in der Führung in einer zweckmäßigen Ausgestaltung der Erfindung eine Hülse angeordnet (beispielsweise durch eine Schweißverbindung), wobei eine Welle in der Hülse gelagert ist, die wiederum mit dem Schenkel in Verbindung steht. Durch ein Abreißen der Hülse in der Führung wird diese entlang der Führung bewegt und zieht hierbei den Schenkel mit der daran angebrachten Welle mit sich.

Vorteilhafte Ausgestaltungsformen der Erfindung werden anhand der folgenden Figuren näher erläutert.

Dabei zeigen:
- Fig. 1: eine dreidimensionale Darstellung einer Fahrerhauslagerung,
- Fig. 2a, 2b, 2c: eine schematische Darstellung der Fahrerhauslagerung in einem Crashfall und
- Fig. 3.: eine detaillierte Darstellung der Anbindung des Schenkels an die Führung.

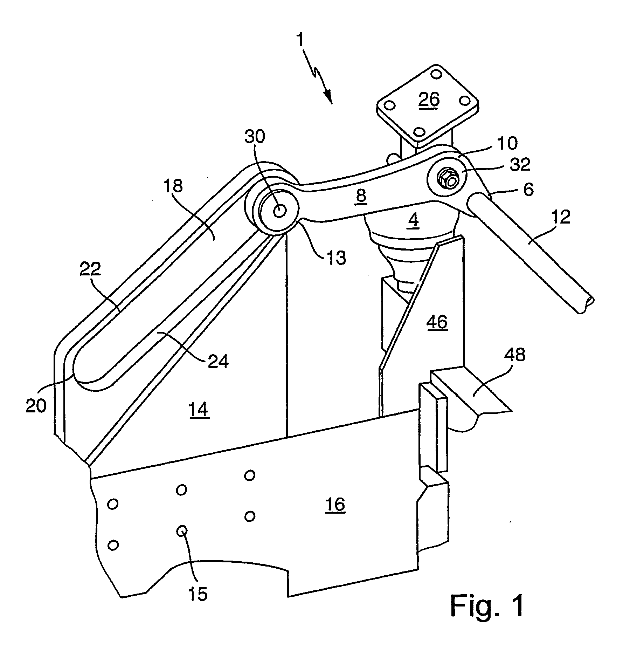

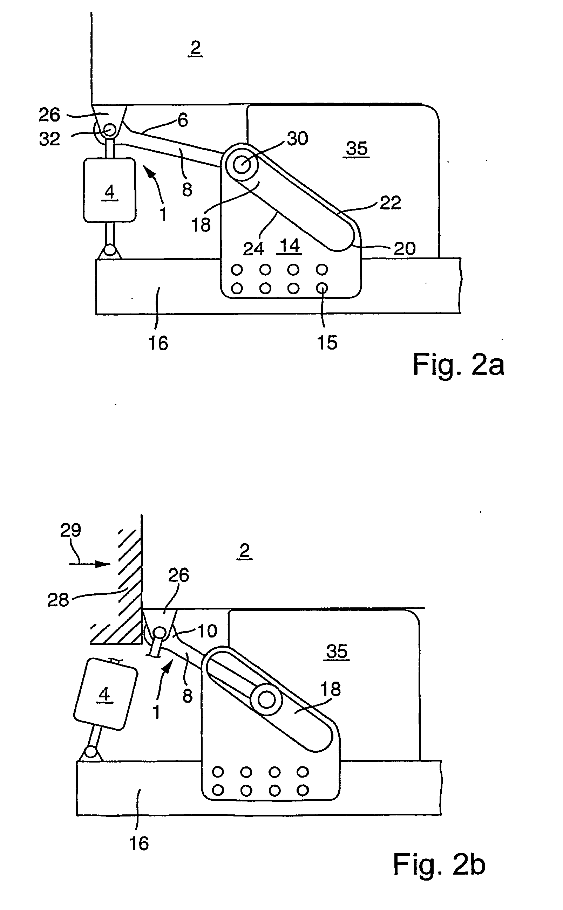

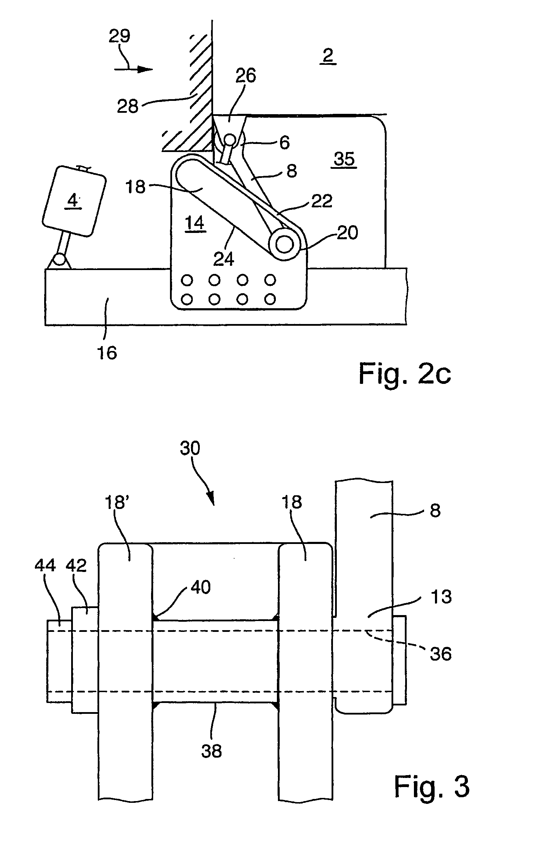

In Figur 1 ist eine dreidimensionale Darstellung einer vorderen Fahrerhauslagerung 1 auf der linken Seite eines Lastkraftwagens gegeben. Zur besseren Übersicht der Darstellung ist das Fahrerhaus an sich nicht abgebildet (vgl. hierzu Fig. 2). Das Fahrerhaus ist auf einer Konsole 26 aufgesetzt. An der Konsole 26 ist unterhalb dieser einerseits ein Federdämpferbein 4 gelagert, andererseits steht der untere Bereich der Konsole 26 mit einer Stabilisatorschwinge 6, genauer ausgedrückt mit dem vorderen Ende 10 eines Schenkels 8 der Stabilisatorschwinge 6 in Verbindung. Die Verbindung zwischen dem Schenkel 8 und der Anbindungskonsole 26 erfolgt über eine Anbindungslagerung 32.

Die Stabilisatorschwinge 6 ist im Wesentlichen U-förmig ausgestaltet, hierbei weist sie zwei Schenkel 8 auf (von denen in Darstellung nach Fig. 1 nur der linke Schenkel abgebildet ist). Die beiden Schenkel 8 sind über eine Stabilisatorstange 12 miteinander verbunden. Die Stabilisatorschwinge, ist wie bereits erwähnt, an ihrem vorderen Ende 10 schwenkbar mit der Konsole 26 verbunden.

Eine ebenfalls schwenkbare Verbindung der Schenkel 8 erfolgt an deren hinteren Ende 13 mit einem Lagerbock 14. Hierbei ist der Schenkel 8 am Lagerbock 14 in einer Führung 18 gelagert. Die Führung 18 weist zwei Führungsschienen, eine obere Führungsschiene 22 und eine untere Führungsschiene 24 auf. Die Führung 18 wird durch eine Wegbegrenzung 20 an ihrem hinteren unteren Ende begrenzt. Der Lagerbock 14 mit der Führung 18 ist wiederum an einem Fahrzeugrahmen 16 durch eine Schraubverbindung 15 befestigt.

In Fahrtrichtung weiter vorne gesehen steht der Fahrzeugrahmen 16 dieser über einer Zwischenkonsole 46 in Verbindung mit dem Federdämpferbein 4. Der hier dargestellte linke Fahrzeugrahmen 16 ist über einen Querträger 48 mit einem rechten Fahrzeugrahmen verbunden.

In den Figuren 2a bis 2c ist die Deformation des Fahrerhauses 2 und der Fahrerhauslagerung 1 in einem Crashfall schematisch dargestellt. Im Wesentlichen entsprechen die in der Figur 2 dargestellten Komponenten in schematischer Darstellung den bereits in Figur 1 erläuterten Komponenten. Gleiche Komponenten werden hierbei mit gleichen Bezugszeichen versehen.

In Figur 2a ist nun der Grundzustand analog der Figur 1 der Fahrerhauslagerung 1 und des Fahrerhauses 2 dargestellt. In Figur 2b erfolgt der Aufprall eines Hindernisses 28 in Pfeilrichtung 29. Die Pfeilrichtung 29 entspricht der entgegengesetzten Fahrtrichtung. Das Hindernis 28 trifft auf das Fahrerhaus 2 auf. Hierbei reißt eine Verbindung zwischen dem Federdämpferbein 4 und der Anbindungskonsole 26 ab. Gleichzeitig bewegt sich das Fahrerhaus 2 entlang der Pfeilrichtung 29 nach hinten. Hierbei bewegt sich der Schenkel 8 beziehungsweise die Anbindung des Schenkels 8 an die Führung 18 entlang dieser Führung 18 nach hinten unten. Während des gesamten Bewegungsablaufes bleibt der Schenkel 8 hierdurch fest in der Führung 18 gelagert. Da der Schenkel 8 an seinem vorderen Ende 10 an der Konsole 26 schwenkbar angelagert ist, kann der Schenkel 8 bezüglich der Konsole 26 während der Rückwertsbewegung selbst nach unten abschwenken.

Die Führung des Schenkels 8 in der Führung 18 ist so ausgestaltet, dass sie durch eine Wegbegrenzung 20 begrenzt ist. Die Begrenzung 20 des Schenkels 8 tritt bevorzugt dann auf, wenn das Hindernis auf den Motorblock 35 auftrifft und so eine weitere Bewegung in Richtung Pfeil 29 unterbunden wird.

Auf diese Art und Weise wird das Fahrerhaus 2 soweit wie möglich aus der Gefahrenzone im Kollisionsbereich mit dem Hindernis 28 weggezogen. Es kann jedoch auch sein, dass das Wegbewegen des Fahrerhauses 2 aus der Gefahrenzone nicht so weit erfolgen kann, wie dies in der Figur 2c schematisiert dargestellt ist, sondern dass eine weitere Deformation des Fahrerhauses 2 hervorgerufen durch den Aufprall des Hindernisses 28 erfolgen muss, bis das Hindernis 28 schließlich am Motorblock 35 zum Stillstand kommt. Hierfür ist das Fahrerhaus in seinem vorderen Bereich entsprechend deformierbar ausgestaltet. Die erfindungsgemäße Führung des Schenkels 8 der Stabilisatorschwinge 6 trägt jedoch erheblich dazu bei, das Fahrerhaus 2 zum großen Teil aus der Gefahrenzone herauszubewegen und dieses während der gesamten Bewegung fest mit dem Rahmen 16 in Verbindung zu halten.

In Figur 3 ist eine Draufsicht auf den Verbindungsbereich zwischen dem Schenkel 8 der Stabilisatorschwinge 6 und der Führung 18 in einer zweckmäßigen Ausgestaltungsform gegeben. Die Führung 18 weist in dieser Ausgestaltung nach Figur 3 zwei parallel verlaufende Führungen 18 und 18' auf. Grundsätzlich kann auch eine breite Führung 18 diese Funktion übernehmen. Vertikal zur Führung 18 ist ein Rohr 38 in dieser Führung 18 befestigt, wobei in dieser Ausgestaltung die Befestigung in Form einer Schweißnaht 40 erfolgt. Das Rohr (beziehungsweise die Hülse) 38 ist so ausgestaltet, dass in ihr eine Welle 36 verläuft, die wiederum in dem hinteren Ende 13 des Schenkels 8 angelagert ist. Die Welle 36 ist auf der gegenüberliegenden Seite durch eine Haltescheibe 42 und eine Schraube 44 so in das Rohr 38 und die Führung 18 eingeklemmt, dass sie weder in Richtung des Schenkels noch in Richtung der Haltescheibe 42 bewegbar ist.

Bei Auftreten eines Crashfalles und einer so über den Schenkel 8 eingeleiteten kritischen Kraft reißt die Schweißnaht 40, die das Rohr 38 mit der Führung 18 verbindet gezielt auf, wodurch eine Bewegung des Rohres 38 entlang der Führung 18 ermöglicht wird. Das Rohr 38 zieht somit die Welle 36, die am Schenkel 8 befestigt ist mit, entlang der Führung 18.

Grundsätzlich sind selbstverständlich andere Befestigungsmöglichkeiten des Schenkels 8 an der Führung 18 denkbar. Beispielsweise kann auch eine reine Klemmverbindung oder eine Schraubverbindung, die definiert abreißt eine gezielte Lagerung des Schenkels 8 an der Führung 18 des Lagerbocks 14 gewährleisten.

## Patentansprüche

1. Lagerung eines kippbaren Fahrerhauses (2) eines Lastkraftwagens, umfassend mindestens ein Federdämpferbein (4) an jeder Fahrzeugseite und eine Stabilisatorschwinge (6) die ebenfalls an jeder Fahrzeugseite einen, in etwa in Fahrzeuglängsrichtung angeordneten Schenkel (8) aufweist, wobei die Schenkel (8) im Bereich ihre vorderen Endes (10) durch eine quer zur Fahrzeuglängsrichtung verlaufende Stabilisatorstange (12) verbunden sind und im Bereich ihres hinteren Endes (13) an jeweils einem Lagerbock (14) angelagert sind, der an einem Fahrzeugrahmen (16) angeordnet ist, wobei die Federdämpferbeine (4) im unteren Bereich mit dem Fahrzeugrahmen (16) in Verbindung stehen und im oberen Bereich mit dem Fahrerhaus und mit jeweils dem vorderen Ende des jeweiligen Schenkels (8) der Stabilisatorschwinge (6) in Verbindung stehen,
**dadurch gekennzeichnet, dass**
der Lagerbock (16) eine Führung (18) aufweist und die hinteren Enden (13) der Schenkel (8) in der Führung (18) in der Art gelagert sind, dass sie nach Überwindung einer kritischen Kraft entlang der Führung (18) nach hinten verschiebbar sind.

2. Vordere Lagerung eines kippbaren Fahrerhauses nach Anspruch 1
**dadurch gekennzeichnet, dass**
die Führung (18) nach hinten unten weist.

3. Vordere Lagerung eines kippbaren Fahrerhauses nach Anspruch 1 oder 2
**dadurch gekennzeichnet, dass**
am Ende der Führung (18) eine Wegbegrenzung (20) vorgesehen ist.

4. Vordere Lagerung eines kippbaren Fahrerhauses nach einem der Ansprüche 1 bis 3,
**dadurch gekennzeichnet,**
**dass** die Führung (18) eine obere (22) und eine untere Führungsschiene (24) aufweist.

5. Vordere Lagerung eines kippbaren Fahrerhauses nach einem der Ansprüche 1 bis 4,
**dadurch gekennzeichnet,**
**dass** vertikal zur Führung an dieser eine Hülse angeordnet ist, in der eine Welle gelagert ist, die mit dem Schenkel (8) in Verbindung steht.

## Claims

1. Mounting system for a tilting driver's cabin (2) of a goods vehicle, comprising at least one sprung shock-absorber (4) on each side of the vehicle and a stabilising rocker (6) which has, again on each side of the vehicle, an arm (8) arranged approximately in the longitudinal direction of the vehicle, such that the arms (8) are connected in the area of their front ends (10) by a stabiliser bar (12) that extends transversely to the longitudinal axis of the vehicle and are mounted in the area of their rear ends (13), in each case on a bearing block (14) arranged on a vehicle frame (16), the shock-absorbers (4) being connected in their lower area to the vehicle frame (16) and in their upper area to the driver's cabin and in each case to the front end of the respective arm (8) of the stabilising rocker (6),
**characterised in that**
the bearing block (14) has a guide (18) and the rear ends (13) of the arms (8) are fitted into the guides (18) in such manner that if a critical force is exceeded, they can slide towards the rear along the guide (8).

2. Front mounting system for a tilting driver's cabin according to Claim 1,
**characterised in that**
the guide (18) is inclined downwards towards the rear.

3. Front mounting system for a tilting driver's cabin according to Claims 1 or 2,
**characterised in that**
a path limiter (20) is provided at the end of the guide (18).

4. Front mounting system for a tilting driver's cabin according to any of Claims 1 to 3,
**characterised in that**
the guide (18) comprises an upper (22) and a lower (24) guide rail.

5. Front mounting system for a tilting driver's cabin according to Claims 1 or 2,
**characterised in that**
a sleeve is arranged vertically on the guide, into which there fits a shaft connected to the arm (8).

## Revendications

1. Support d'une cabine de conduite (2) basculante d'un camion, comprenant au moins une jambe de suspension (4) sur chaque côté du véhicule et un bras oscillant (6) qui présente également sur chaque côté de véhicule un corps de bras (8) disposé sensiblement dans le sens longitudinal du véhicule, les corps de bras (8) étant reliés dans la zone de leur extrémité avant (10) par une barre stabilisatrice (12) s'étendant transversalement au sens longitudinal du véhicule et étant fixés dans la zone de leur extrémité arrière (13) sur respectivement un bloc de support (14) qui est disposé sur un châssis de véhicule (16), les jambes de suspension (4) étant en liaison, dans la zone inférieure, avec le châssis de véhicule (16) et étant en liaison, dans la zone supérieure, avec la cabine de conduite et avec respectivement l'extrémité avant de chaque corps de bras (8) du bras oscillant (6), **caractérisé en ce que** le bloc de support (14) présente un guidage (18) et les extrémités (13) arrière des corps de bras (8) sont logées dans le guidage (18) de sorte à pouvoir se déplacer vers l'arrière le long du guidage (18) après avoir surmonté une force critique.

2. Support avant d'une cabine de conduite basculante selon la revendication 1, **caractérisé en ce que** le guidage (18) est dirigé vers le bas et l'arrière.

3. Support avant d'une cabine de conduite basculante selon la revendication 1 ou 2, **caractérisé en ce qu'**une limitation de course (20) est prévue sur l'extrémité du guidage (18).

4. Support avant d'une cabine de conduite basculante selon l'une quelconque des revendications 1 à 3, **caractérisé en ce que** le guidage (18) présente un rail de guidage supérieur (22) et un rail de guidage inférieur (24).

5. Support avant d'une cabine de conduite basculante selon l'une quelconque des revendications 1 à 4, **caractérisé en ce qu'**une douille, dans laquelle est logé un arbre qui est en liaison avec le corps de bras (8), est disposée verticalement par rapport au guidage sur celui-ci.
